# EUROPÄISCHE PATENTANMELDUNG

(11) **EP 3 024 304 A1**
(43) Veröffentlichungstag der Anmeldung: **25.05.2016**
(21) Anmeldenummer: 15187476.5
(22) Anmeldetag: 29.09.2015
(51) Int. Cl.: H05B 37/02

(54) **STEUERVORRICHTUNG UND STEUERVERFAHREN FÜR LEUCHTDIODEN**

(30) Priorität: 11.11.2014 CH 17482014
(71) Anmelder: Energy Management Team AG, 8273 Triboltingen (CH)
(72) Erfinder: Sauter, Beat, 8272 Ermatingen (CH)
(74) Vertreter: Gachnang, Hans Rudolf

(57) **Zusammenfassung**

Die Steuervorrichtung ist zum Steuern einer Anordnung von Leuchtdioden (7) ausgebildet, die auf einem Leuchtdiodenmodul (5) mit einer Ansteuerelektronik (9) angeordnet sind. Sie umfasst eine Spannungsquelle (1), deren Ausgangsspannung zum Übermitteln von gespeicherten Befehlscodes an die Ansteuerelektronik (6) entsprechend den Vorgaben des zu übermittelnden Befehlscodes zwischen einer ersten Betriebsspannung UB1 und einer zweiten Betriebsspannung UB2 veränderbar ist. Die Ansteuerelektronik (6) umfasst einen Detektor zum Erfassen und Auswerten der übermittelten Befehle.

## Beschreibung

Gegenstand der Erfindung ist eine Steuervorrichtung und ein Steuerverfahren zum Steuern einer Anordnung von Leuchtdioden gemäss dem Oberbegriff der Patentansprüche 1 und 9.

Leuchtdioden oder kurz LED werden verbreitet als Leuchtmittel bei Leuchten unterschiedlichster Art wie z.B. Kronleuchtern, Pendelleuchten, Stehleuchten, Leseleuchten und dergleichen eingesetzt. LED können auch bei Objekten wie z.B. Möbeln eingebaut sein. Insbesondere bei Anwendungen, wo die Leuchtmittel an unterschiedlichen Stellen angeordnet sind, ist der Aufwand für Verkabelung und Ansteuerung der einzelnen Leuchtmittel aufwändig. Oft erlaubt es das Design einer Leuchte nicht, zusätzlich zu den beiden für die Speisung notwendigen elektrischen Leitern auch noch eine Steuerleitung vorzusehen.

Bei herkömmlichen Zweileiter-Bussystemen ist es bekannt, für die Energieübertragung und die Übertragung von Steuersignalen zu einer Last nur zwei Leiter zu nutzen. Dabei werden der Speisespannung Steuersignale eines anderen Frequenzbereichs aufmoduliert. Lastseitig sind Filter vorgesehen, welche die Steuersignale herausfiltern. Solche Filter umfassen Schwingkreise mit kapazitiven und induktiven Elementen, welche auf den herauszufilternden Frequenzbereich abgestimmt sind. Der vergleichsweise grosse Raumbedarf und die Anzahl erforderlicher Bauteile für solche Filter sind bei vielen Anwendungen hinderlich.

Eine Aufgabe der vorliegenden Erfindung liegt darin, eine Steuervorrichtung und ein Steuerverfahren zum Steuern einer oder mehrerer Leuchtioden zu schaffen, die einfach aufgebaut ist, wenig Platz beansprucht und unempfindlich gegenüber elektromagnetischen Störeinflüssen ist.

Diese Aufgabe wird gelöst durch eine Steuervorrichtung und durch ein Steuerverfahren gemäss den Merkmalen der Patentansprüche 1 und 9.

Die Steuervorrichtung umfasst eine Spannungsquelle, die ausgangsseitig eine Gleichspannung zum Speisen eines oder mehrerer Leuchtdiodenmodule mit je einer oder mehreren Leuchtdioden bereitstellt. Die Spannungsquelle kann beispielsweise als Netzteil ausgebildet sein, welches eingangsseitig an das 230 VAC - Stromnetz angeschlossen wird und ausgangsseitig eine Gleichspannung zum Speisen der angeschlossenen Leuchtdiodenmodule bereitstellt. Alternativ zur Integration in ein Netzteil könnte die Spannungsquelle auch als separates Gerät ausgebildet sein, welches eingangsseitig an ein Netzgerät bzw. eine beliebige andere Spannungsquelle mit einer Ausgangsspannung von z.B. 24VDC angeschlossen wird. Erfindungsgemäss umfasst die Spannungsquelle eine Steuereinheit mit einer Umschaltvorrichtung zum Umschalten der Ausgangsspannung zwischen mindestens zwei definierten Betriebsspannungen. Zum Übermitteln von Befehlen bzw. Nachrichten an eines oder mehrere der Leuchtdiodenmodule veranlasst eine Steuereinheit der Steuervorrichtung in einer definierten zeitlichen Abfolge, die dem jeweiligen Befehl zugeordnet ist, einen Wechsel der Ausgangsspannung zwischen den vorgegebenen Betriebsspannungen. Bei einer vorteilhaften Ausgestaltung umfasst die Umschaltvorrichtung einen elektronischen Schalter, der in der Verbindungsleitung zum jeweiligen Ausgang der Spannungsquelle angeordnet und normalerweise geschlossen ist. Parallel zu diesem Schalter ist eine Serienschaltung zweier Dioden angeordnet, die in Durchlassrichtung mit dem Ausgang der Spannungsquelle verbunden sind. Normalerweise ist der Schalter geschlossen, sodass am Ausgang die normale Betriebsspannung ausgegeben wird. Wird der Schalter geöffnet, reduziert sich die Spannung am Ausgang bei angeschlossener Last um den Spannungsabfall an den Dioden. Mit zwei seriell geschalteten Dioden ist die Empfindlichkeit gegenüber Störspannungen in der Regel gut. Alternativ könnte bei geringem Risiko von Störspannungen auch nur eine Diode zum Erzeugen eines kleineren Spannungsabfalls eingesetzt werden.

Alternativ zu Dioden könnte ein Spannungsabfall auch in anderer Weise erzeugt werden, beispielsweise durch einen ohmschen Widerstand oder durch eine gesteuerte Spannungsquelle. Ein wesentlicher Vorteil der Erzeugung eines Spannungsabfalls mit Dioden liegt darin, dass sich dieser auf einfache Weise mit nur wenigen Bauteilen erreichen lässt. Im Weiteren ist der Spannungsabfall bei Dioden im Vergleich zu einem ohmschen Widerstand nur unwesentlich abhängig von der Höhe des Stroms, den eine angeschlossene Last zieht.

In einem Speicher der Steuereinheit sind ein oder mehrere Steuerbefehle gespeichert. Diese Befehle können an das oder die Leuchtdiodenmodule übermittelt werden, indem der Schalter im zugeordneten zeitlichen Muster geöffnet und wieder geschlossen wird. Der übermittelte Code umfasst Steuerinformationen zum Steuern einer, mehrerer oder aller Leuchtdioden eines, mehrerer oder aller Leuchtdiodenmodule. Der Code beinhaltet insbesondere Angaben zu dem oder den einzustellenden Helligkeitswerten bzw. zu den einzustellenden Diodenströmen. Minimal kann mit einem Bit zwischen den beiden Werten 0 für keine Leistung und 1 für maximale Leistung unterschieden werden. Durch Angabe eines oder mehrerer zusätzlicher Bits kann die Auflösung der möglichen Leistungsschritte erhöht werden. Vorzugsweise umfasst der Code eine Adressinformation, welche einen eindeutigen Bezug zu einem bestimmten Leuchtdiodenmodul und/oder einer bestimmten Leuchtdiode auf einem Leuchtdiodenmodul haben. Je nach Anwendung können in an sich bekannter Weise Protokolle und Befehle definiert sein.

Die Leuchtdiodenmodule umfassen je einen Schaltungsträger mit einer oder mehreren Leuchtdioden sowie eine Ansteuerelektronik mit einer Treiberschaltung zum Ansteuern der Leuchtdioden mit einem vorgebbaren Strom. Da die Treiberschaltung als Konstantstromquelle arbeitet, die den Strom auf einen vorgebbaren Sollstrom regelt, bleibt die Helligkeit der LEDs im Wesentlichen unabhängig von Änderungen der Betriebsspannung, wie sie beim Übertragen von Steuersignalen von der Spannungsquelle auftreten. Zum Erkennen und Auswerten solcher Steuersignale umfasst die Ansteuerelektronik eine Logikschaltung, welche die Änderungen der Betriebsspannung erfasst, das zeitliche Muster dieser Änderungen mit gespeicherten Vorgabewerten vergleicht und die Treiberschaltung entsprechend den erkannten Befehlsvorgaben steuert. In der Regel umfasst die Logikschaltung eingangsseitig eine Pegelanpassung, welche den Pegel der Betriebsspannung, z.B. einer Schutzkleinspannung von 24 VDC, an einen mit der Logikschaltung kompatiblen Wert anpasst oder begrenzt. Die Auswertung der so erfassten Signale kann beispielsweise mittels eines Komparators oder mittels eines AD-Wandlers erfolgen, wobei die zeitliche Abfolge der eintreffenden Signale mit den gespeicherten Werten verglichen wird. Dafür sind keine Netzfilter mit Induktivitäten erforderlich. Die Erfassung der von der Spannungsquelle über die Versorgungsleitungen gesendeten Informationen ist platzsparend, mit wenigen Bauteilen und somit einfach und kostengünstig möglich. Insbesondere sind solche Schaltungen auch robust gegenüber elektromagnetischen Störungen.

Optional kann die Steuervorrichtung auch zur Durchführung einer Zweiwegkommunikation über die beiden Versorgungsleitungen ausgebildet sein, wobei ein oder mehrere Leuchtdiodenmodule und/oder Bedienelemente Strompulse in die Versorgungsleitungen einprägen, die dann von einem Stromsensor in der Steuereinheit der Spannungsquelle erfasst und ausgewertet werden. Auf diese Weise können mehrere verteilt angeordnete und mit den Versorgungsleitungen verbundene Lichtquellen und Bedienelemente miteinander koordiniert und gesteuert werden, wobei die Steuereinheit der Spannungsquelle als Master und die Leuchtdiodenmodule und Bedienelemente als Slaves arbeiten. Die Datenübertragungsrate kann vergleichsweise klein sein und beispielsweise 300 Baud betragen.

Die Leuchtdioden können zum Emittieren von weissem Licht ausgebildet sein. Alternativ oder zusätzlich können auch Leuchtdioden für rotes, grünes und blaues Licht vorgesehen sein, wobei durch individuelle Vorgabe von Ansteuerwerten für die einzelnen Farben unterschiedliche Lichtfarben erzeugt werden können.

Anhand einiger Figuren wird die Erfindung im Folgenden näher beschrieben. Dabei zeigen
- Figur 1: Eine schematisch dargestellte Steuervorrichtung mit einer Spannungsquelle und mehreren daran angeschlossenen Leuchtdiodenmodulen,
- Figur 2: eine Vorrichtung zum Umschalten der von der Spannungsquelle ausgegebenen Betriebsspannung,
- Figur 3: eine prinzipielle Schaltungsanordnung zum Detektieren von Wechseln der Betriebsspannung,
- Figur 4: eine Detektorschaltung zur Erfassung von Änderungen der Betriebsspannung, wie sie in einer Ansteuerelektronik eines Leuchtdiodenmoduls verwendet wird,
- Figur 5: eine Schaltungsanordnung zum Einprägen von Strompulsen bei einem Leuchtdiodenmodul oder einem Bedienelement,
- Figur 6: eine Schaltungsanordnung zum Detektieren von Strompulsen bei der Spannungsquelle.

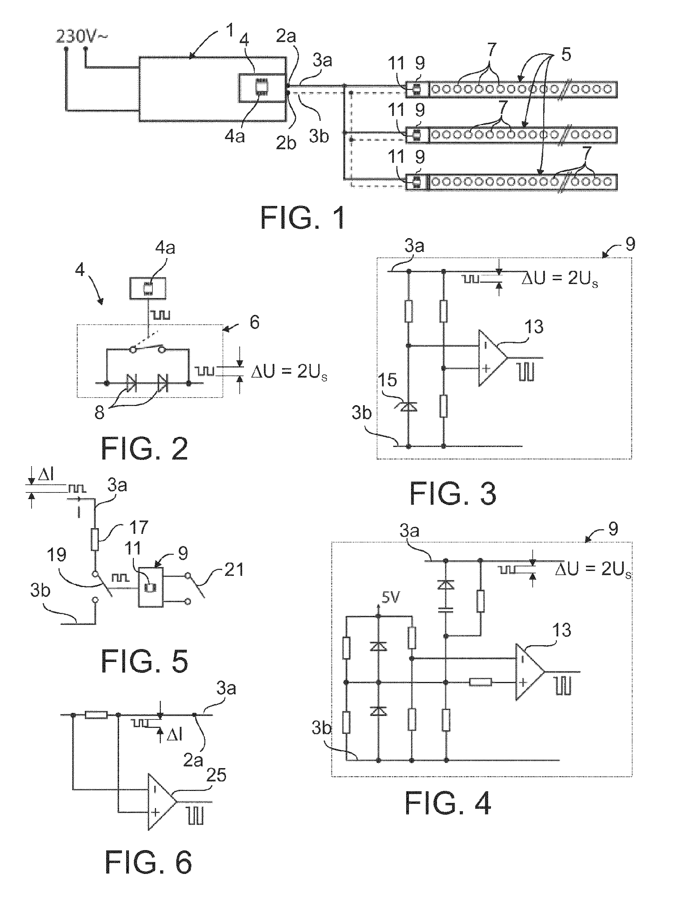

Figur 1 zeigt eine prinzipielle Schaltungsanordnung mit einer Spannungsquelle 1 und mehreren Leuchtdiodenmodulen 5, die über zwei Leiter 3a, 3b mit den ausgangsseitigen Polen 2a, 2b der Spannungsquelle 1 verbunden sind. Die Spannungsquelle 1 umfasst eine primäre Steuereinheit 4 mit einem Schaltmittel 6 zum Umschalten des Wertes der Ausgangsspannung zwischen zwei unterschiedlichen Betriebsspannungswerten UB1 und UB2.

Jeder der Leuchtdiodenmodule 5 umfasst vorzugsweise auf einem gemeinsamen Schaltungsträger eine oder mehrere Leuchtdioden 7 und eine sekundäre Steuereinheit bzw. Ansteuerelektronik 9 mit einer Treiberschaltung (nicht dargestellt) zum gemeinsamen oder individuellen Ansteuern der Leuchtdioden 7 des jeweiligen Leuchtdiodenmoduls 5 mit einem für jede der Leuchtdioden 7 individuell oder für mehrere oder alle Leuchtdioden 7 gemeinsam vorgegebenen Strom. Des Weiteren umfasst die Ansteuerelektronik 9 eine Ansteuerlogik zum Steuern des durch die Leuchtdioden 7 fliessenden Stroms. Falls die Ansteuerlogik eine eigene Betriebsspannung benötigt, deren Wert sich von jenem am Ausgang der Spannungsquelle 1 unterscheidet und beispielsweise 5VDC beträgt, kann die Ansteuerelektronik 9 Mittel zum Bereitstellen dieser Betriebsspannung aus der an den Polen 2a, 2b des Ausgangs der Spannungsquelle 1 erzeugten Betriebsspannung umfassen (nicht dargestellt). Die Ansteuerlogik umfasst vorzugsweise einen Microcontroller 11, in dem insbesondere Vorschriften und Daten zum Ansteuern der Leuchtdioden 7 gespeichert sind.

Figur 2 zeigt eine bevorzugte Schaltungsanordnung der primären Steuereinheit 4, wobei das Schaltmittel 6 in der Zuleitung eines der Pole 2a, 2b angeordnet ist und einen elektronischen Schalter und parallel dazu zwei in Durchlassrichtung in Serie geschaltete Dioden 8 umfasst. Die primäre Steuereinheit 4 umfasst vorzugsweise einen Microcontroller 4a, in dessen Speicher Steuervorschriften zum Steuern des elektronischen Schalters und mindestens ein Code gespeichert sind. Der Code repräsentiert einen Befehl, der durch Öffnen und Schliessen des elektronischen Schalters in einer durch den Code repräsentierten zeitlichen Abfolge über die Leitungen 3a, 3b an das Leuchtdiodenmodul 5 übermittelt werden kann. Bei geschlossenem elektronischem Schalter wird die erste Betriebsspannung UB1 am Ausgang der Spannungsquelle 1 ausgegeben, bei offenem Schalter die um die Durchlassspannungen U_{S} der beiden Dioden reduzierte zweite Betriebsspannung UB2 = UB1- 2U_{S}. Typischerweise beträgt die erste Betriebsspannung UB1=24VDC. Der wirksame Spannungsabfall an den Dioden 8 kann beispielsweise etwa 1V betragen, sodass die zweite Betriebsspannung UB2 etwa 23VDC beträgt. Selbstverständlich können die Werte auch davon abweichen, wobei die Differenzspannung ΔU = UB2- UB1 vorzugsweise im Bereich von 2% bis 10% der ersten Betriebsspannung UB1 oder von etwa 0.5V bis 2.5V liegt. Der Microcontroller 4a steuert die Übermittlung von Codes über die Leitungen 3a, 3b. Diese Datenübermittlung kann in Abhängigkeit eines vorgegebenen Programms und/oder in Abhängigkeit von Messgrössen, insbesondere Messgrössen von Sensoren und/oder Bedienelementen bzw. Eingabemitteln, gesteuert werden.

Figur 3 zeigt ein Prinzipschaltbild des Komparators einer Detektorschaltung der Ansteuereinheit 9, wobei die Referenzspannung am invertierenden Eingang des Operationsverstärkers 13 mittels einer Zenerdiode 15 so festgelegt wird, dass Spannungswechsel zwischen der ersten Betriebsspannung UB1 und der zweiten Betriebsspannung UB2 am Ausgang des Operationsverstärkers 13 Schaltflanken erzeugen. Der Microcontroller 11 wertet die zeitliche Abfolge der detektierten Spannungspulse aus und vergleicht diese mit gespeicherten Mustern, welche die auszuführenden Befehle repräsentieren. Die Übertragung von Daten kann z.B. gemäss bekannten Standards für die serielle asynchrone Datenübertragung erfolgen. Entsprechende UARTs (Universal Asynchronous Receiver Transmitter) sind bekannt und können direkt beim Microcontroller 11 integriert sein. Grundsätzlich ist die Art der Datenübertragung nicht auf normierte Standards beschränkt. Insbesondere können Daten z.B. auch mittels Pulsweitenmodulation codiert werden. Entsprechend der erkannten Muster bzw. Befehle steuert der Microcontroller 11 die Leuchtdioden 7 des zugehörigen Leuchtdiodenmoduls 5. Einige Beispiele solcher Befehle sind
a) die Einstellung eines vorgegebenen Helligkeitswertes (ein; aus; prozentualer Wert der maximalen Helligkeit bzw. des maximalen Ansteuerstroms);
b) Ansteuerwerte für Leuchtdioden unterschiedlicher Farbe;
c) Aktivierung / Deaktivierung einer automatischen Steuerung gemäss einem im Microcontroller 11 gespeicherten Steuerprogramms (z.B. Steuerung von Farbtemperatur und/oder Helligkeit in Abhängigkeit der Tageszeit und/oder in Abhängigkeit von sensorisch erfassten Messgrössen wie z.B. der von einem Präsenzmelder feststellbaren Anwesenheit von Personen).

Figur 4 zeigt eine Modifikation der Schaltung aus Figur 3, wobei zusätzlich eine Schaltung zur Pegelanpassung des an den Leitungen 3a, 3b anliegenden Spannungssignals an die Betriebsspannung von beispielsweise 5VDC des Microcontrollers 11 bzw. der Auswerteelektronik der Ansteuereinheit 9 an. Diese weitere Betriebsspannung wird direkt von der Ansteuereinheit 9 aus der an den Leitungen 3a, 3b anliegenden Versorgungsspannung erzeugt. Alternativ zu einem Komparator könnte die Detektorschaltung der Ansteuereinheit 9 beispielsweise auch einen Analog-Digital-Wandler umfassen, um die Spannung zwischen den Leitern 3a, 3b zu erfassen. Bei einer solchen Anordnung könnte das Schaltmittel 6 der Spannungsquelle 1 auch mehrere elektronische Schalter zum Überbrücken einer unterschiedlichen Anzahl mehrerer in Serie geschalteter Dioden 8 umfassen (nicht dargestellt). Bei einer solchen Anordnung könnte alternativ oder zusätzlich zur zeitlichen Codierung einer Pulsfolge auch eine Codierung durch mehr als zwei unterschiedliche Spannungswerte der Betriebsspannung erfolgen.

Bei einer besonders vorteilhaften Ausgestaltung der Erfindung umfasst die Ansteuereinheit 9 des Leuchtdiodenmoduls 5 eine Sendevorrichtung zum Übermitteln von Informationen an die Spannungsquelle 1. Eine bevorzugte Ausführungsform einer solchen Sendevorrichtung ist in Figur 5 dargestellt. Dabei sind zwischen den Leitungen 3a, 3b ein Widerstand 17 und ein elektronisches Schaltelement 19 in Serie angeordnet. Beim Schliessen des Schaltelements 19 fliesst ein zusätzlicher Strom ΔI, der sich dem aktuell fliessenden Strom I überlagert. Analog zur Informationsübermittlung mittels Spannungspulsen von der Spannungsquelle 1 an die Leuchtdiodenmodule 5 kann die Ansteuerelektronik 9 von Leuchtdiodenmodulen 5 auch in umgekehrter Richtung Befehle in Form von Mustern von zeitlich aufeinanderfolgenden Strompulsen an die Spannungsquelle 1 übermitteln. Die möglichen Befehlsmuster sind in einem Speicher der Ansteuerelektronik 9 und in einem Speicher der Spannungsquelle 1 gespeichert. Solche Befehle können z.B. autonom vom Steuerprogramm des Microcontrollers 11 an die Spannungsquelle 1 übermittelt werden. Insbesondere kann die Ansteuerelektronik 9 auch ein oder mehrere Bedienelemente umfassen, beispielsweise einen Schalter 21 und abhängig von der Betätigung dieses Schalters 21 Befehle an die Spannungsquelle 1 übermitteln. Solche Bedienelemente mit einer entsprechenden Ansteuerelektronik 9 können auch unabhängig von Leuchtdiodenmodulen 5 an beliebigen Stellen zwischen die beiden Leiter 3a, 3b geschaltet werden (nicht dargestellt).

Zum Detektieren der von Leuchtdiodenmodulen 5 oder Bedienelementen übermittelten Befehle umfasst die Spannungsquelle 1 einen Stromdetektor, der so ausgebildet ist, dass er die übermittelten Strompulse bzw. Stromänderungen ΔI beim jeweiligen Strom I erfassen und auswerten kann. Figur 6 zeigt prinzipiell eine Schaltungsanordnung, bei der ein Shunt bzw. niederohmiger Messwiderstand 23 in der zuführenden Leitung zum ersten Pol 2a bzw. zur ersten Leitung 3a angeordnet ist. Der Spannungsabfall über diesem Messwiderstand 23 wird mittels eines Operationsverstärkers 25 verstärkt. Anschliessend können die Spannungsänderungen, insbesondere deren zeitliche Abfolge, ausgewertet und mit Mustern von Befehlen verglichen werden, die in einem Speicher der primären Steuereinheit 4 gespeichert sind.

In Abhängigkeit derart erkannter Befehle kann die als Master arbeitende primäre Steuereinheit 4 entsprechende Befehle an die Leuchtdiodenmodule 5 übermitteln.

Die Vorrichtung zum unidirektionalen oder bidirektionalen Übermitteln von Befehlen zwischen der Spannungsquelle 1 und Leuchtdiodenmodulen 5 lässt sich selbst bei eingeschränkten Platzverhältnissen mit wenigen Bauteilen einfach und kostengünstig realisieren und ist robust und störungsunempfindlich. Insbesondere bei Leuchten und Büromöbeln, wo das Design oft hohe Ansprüche an die Elektronik setzt, bietet die erfindungsgemässe Lösung wesentliche Vorteile. Bei Bedarf kann eine leitende Struktur der jeweiligen Anwendung als Ground-Leiter 3b genutzt werden, beispielsweise ein metallischer Träger eines Möbels oder ein Ständer einer Stehleuchte, sodass nur noch ein zusätzlicher Leiter 3a zu den Leuchtdiodenmodulen 5 geführt werden muss.

## Patentansprüche

1. Steuervorrichtung zum Steuern einer Anordnung von Leuchtdioden (7) auf mindestens einem Leuchtdiodenmodul (5) mit mindestens einer Leuchtdiode (7) und einer Ansteuerelektronik (9) zum Ansteuern dieser Leuchtdiode (7), wobei das Leuchtdiodenmodul (5) über zwei elektrische Leiter (3a, 3b) mit den Polen (2a, 2b) einer elektrischen Spannungsquelle (1) verbunden ist, **dadurch gekennzeichnet, dass** die Spannungsquelle (1) eine primäre Steuereinheit (4) mit einem primären Schaltmittel (6) zum Umschalten der an den Polen (2a, 2b) erzeugten Ausgangsspannung zwischen einer ersten Betriebsspannung UB1 und einer weiteren Betriebsspannung UB2 umfasst, dass diese Ausgangsspannung zum Übermitteln von Befehlen an das Leuchtdiodenmodul (5) in einer vorgegebenen zeitlichen Abfolge umschaltbar ist, und dass die Ansteuerelektronik (9) des Leuchtdiodenmoduls (5) einen Detektor zum Erfassen und Auswerten der übermittelten Nachrichten umfasst.

2. Steuervorrichtung nach Anspruch 1, **dadurch gekennzeichnet, dass** das primäre Schaltmittel (6) einen elektronischen Schalter in der Verbindungsleitung zu einem der Pole (2a, 2b) umfasst, und dass parallel zu diesem elektronischen Schalter mindestens eine in Durchlassrichtung geschaltete Diode (8) zum Erzeugen eines Spannungsabfalls der Ausgangsspannung bei geöffnetem Schalter angeordnet ist.

3. Steuervorrichtung nach einem der Ansprüche 1 oder 2, **dadurch gekennzeichnet, dass** die primäre Steuervorrichtung (4) einen Speicher umfasst, in dem an das Leuchtdiodenmodul (5) zu übermittelnde Befehlscodes gespeichert sind, und dass die primäre Steuervorrichtung (4) zum Übermitteln solcher Befehlscodes in Abhängigkeit von Vorgaben eines Steuerprogramms und/oder eines Sensorsignals und/oder eines Bedienelements ausgebildet ist.

4. Steuervorrichtung nach einem der Ansprüche 1 bis 3, **dadurch gekennzeichnet, dass** der Detektor der Ansteuerelektronik (9) einen Komparator oder einen Analog-Digital-Wandler umfasst, der so ausgebildet und mit den Leitern (3a, 3b) verbunden ist, dass er einen Wechsel zwischen den Betriebsspannungen UB1 und UB2 detektieren kann.

5. Steuervorrichtung nach einem der Ansprüche 1 bis 4, **dadurch gekennzeichnet, dass** die Ansteuerelektronik (9) eine Vorrichtung zum Übermitteln von Daten an die Spannungsquelle (1) umfasst.

6. Steuervorrichtung nach Anspruch 5, **dadurch gekennzeichnet, dass** die Vorrichtung zum Übermitteln von Daten zwischen den Leitern 3a, 3b eine Serienschaltung aus einem Widerstand 17 und einem elektronischen Schaltelement 19 umfasst.

7. Steuervorrichtung nach Anspruch 6, **dadurch gekennzeichnet, dass** das elektronische Schaltelement (19) durch die Ansteuerelektronik (9) direkt oder indirekt mittels eines Bedienelements (21) oder eines Sensors beeinflussbar ist.

8. Steuervorrichtung nach einem der Ansprüche 1 bis 7, **dadurch gekennzeichnet, dass** die Spannungsquelle 1 in der Verbindungsleitung zu einem der Pole (2a, 2b) einen Stromdetektor umfasst, der so ausgebildet ist, dass er als Strompulse bzw. Stromänderungen ΔI codierte Nachrichten erfassen und auswerten kann.

9. Steuerverfahren zum Steuern einer Anordnung von Leuchtdioden (7) bei einer Steuervorrichtung gemäss Anspruch 1, **dadurch gekennzeichnet, dass** die Spannungsquelle (1) eine Nachricht an das Leuchtdiodenmodul (5) übermittelt, indem der Wert der Ausgangsspannung an den Polen (2a, 2b) entsprechend den Vorgaben eines gespeicherten Musters mehrfach zwischen einer ersten Betriebsspannung UB1 und einer zweiten Betriebsspannung UB2 geändert wird, dass das Leuchtdiodenmodul (5) die so übermittelte Nachricht erfasst und durch Vergleich mit gespeicherten Mustern detektiert.

10. Steuerverfahren nach Anspruch 9, **dadurch gekennzeichnet, dass** ein Leuchtdiodenmodul (5) oder Bedienelement anhand gespeicherter Informationen eine Nachricht an die Spannungsquelle (1) übermittelt, indem der durch die Leiter (3a, 3b) fliessende Strom I entsprechend der Vorgaben eines gespeicherten Musters mit Strompulsen ΔI beaufschlagt wird.
